# EUROPEAN PATENT APPLICATION

(11) **EP 2 704 081 A1**
(43) Date of publication of application: **05.03.2014**
(21) Application number: 13425009.1
(22) Date of filing: 15.01.2013
(51) Int. Cl.: G06Q 30/00

(54) **Facilitation of communications between producers and a consumer concerning products possessed by the consumer**

(30) Priority: 28.08.2012 EP 12425142
(71) Applicant: Accenture Global Services Limited, Dublin 4 (IE)
(72) Inventor: Nardelli, Adamo, 20123 Milano (IT); Pettiti, Renato, 10123 Torino (IT); Desiderà, Enrico, 31056 Roncade (IT)
(74) Representative: Müller-Boré & Partner Patentanwälte PartG mbB

(57) **Abstract**

A controller receives products history data concerning one or more products possessed by a consumer, which products may be characterized as being within at least one field or category of products relevant to at least some producers. A terminal in communication with the controller may be used for this purpose. At least a portion of the products history data is provided by the controller to producers and, in return, the controller receives communications from one or more of the producers that are based on the portion of the products history data. The controller then provides such communications to the consumer, for example, via the terminal. Any products history data provided to the producers may be provided in an anonymized form. Additionally, desired product data provided to the controller may be similarly used. Aggregated data may also be provided by the controller to the producers.

## Description

### FIELD

The instant disclosure relates generally to techniques for facilitating communications between entities and, in particular, to facilitating communications between producers and consumers regarding products possessed by consumers.

### BACKGROUND

Efficient communication between entities is a key driver of success in virtually all endeavors. For example, in the context of producers seeking to provide goods and services to consumers, and such consumers that might be willing to engage with such producers, there currently exist a number of channels whereby such entities may communicate with each other. As used herein, a producer may comprise any type of enterprise, typically a commercial enterprise, such as, but not limited to, manufacturers, retailers, service providers, ancillary goods/services providers, etc. For example, conventional advertising channels (print media, broadcast and cable television, direct mail, etc.) have traditionally offered producers a way to reach consumers concerning offered products and services. Furthermore, loyalty programs are marketing programs that induce loyal buying behavior through the offer of rewards, discounts and the like. Because consumers actively enroll in such loyalty programs, producers can tailor communications to this audience. More recently, with the advent of social medial platforms, consumers are able to manifest an affinity for certain producers on-line and thereby receive special offers, advance notice of upcoming product or service releases, etc.

While such techniques have some level of effectiveness, they suffer from a number of drawbacks. For example, they are mainly one-way communication channels, i.e., from producers to consumers, and, in the case of mass media, are necessarily intended for a broad audience and are thus incompatible with specialized, targeted communications to specific consumers. Furthermore, even in those instances in which some information is know about specific consumers, as in the case of loyalty or on-line affinity programs, the communications tend to be focused on communications offered by the relevant producer, rather than the consumer. That is, the communication do not stem from a consumer-centric basis and, at most, producers receive only very basic information from consumers, e.g., demographic information and perhaps some information about specific interests. Further still, loyalty and/or on-line affinity programs offer producers insight into only those customers that have affirmatively expressed a desire to participate in a producer's programs-a comparatively small portion of the potential universe of customers.

Thus, it would be advantageous to provide techniques that improve the ability of entities to communicate with each other, such as producers and consumers, in a mutually beneficial manner.

### SUMMARY

The instant disclosure describes techniques for producers and consumers to communicate with each other, particularly in a manner that permits such communication to be consumer-centric rather than producer-centric. Thus, in an embodiment, a consumer is able to provide, to a controller, products history data concerning one or more products possessed by the consumer, which products may be characterized as being within at least one field or category of products relevant to at least some producers. The products history data may comprise, by way of nonlimiting example, purchase information and/or status information for the one or more products. A terminal in communication with the controller via one or more intervening networks may be used for this purpose and, in an embodiment, the products history data is provided to the controller via a graphical user interface provided by the controller and implemented on the terminal. At least a portion of the products history data is provided by the controller to producers and, in return, the controller receives communications from one or more of the producers that are based on the portion of the products history data. The controller then provides such communications to the consumer, for example, via the terminal. In this embodiment, any products history data provided to the producers may be provided in an anonymized form such that the controller is able to later associate specific communications received from the producers with a consumer.

In addition, to the products history data, the consumer may provide desired product data to the controller in a similar fashion. The desired products data may described products (or services) that the consumer would like to obtain. In this embodiment, the controller can again provide at least a portion of the desired products data to the producers and receive, in return, other communications based on the portion of the desired products data. In turn, the controller can provide the other communications to the consumer via the terminal.

In yet another embodiment, the controller my aggregate products history data for more than one consumer and provide the resulting aggregated products history data to the plurality of producers. Likewise, the controller may aggregate desired product data for multiple consumers and provide the resulting aggregated desired product data to producers. In one aspect of this embodiment, any aggregated data from the controller is provided in an anonymized form.

### BRIEF DESCRIPTION OF THE DRAWINGS

The features described in this disclosure are set forth with particularity in the appended claims. These features will become apparent from consideration of the following detailed description, taken in conjunction with the accompanying drawings. One or more embodiments are now described, by way of example only, with reference to the accompanying drawings wherein like reference numerals represent like elements and in which:

FIG. 1 is a block diagram of a system in accordance with the instant disclosure;

FIG. 2 is a block diagram of a processing device that may be used to implement various aspects of the teachings of the instant disclosure;

FIG. 3 is a flowchart illustrating processing performed by a controller in accordance with the teachings of the instant disclosure;

FIG. 4 is a flowchart illustrating processing performed by a terminal in accordance with the teachings of the instant disclosure;

FIG. 5 illustrates one example of a graphical user interface in accordance with the teachings of the instant disclosure; and

FIG. 6 illustrates another example of a graphical user interface in accordance with the teachings of the instant disclosure.

### DETAILED DESCRIPTION OF THE PRESENT EMBODIMENTS

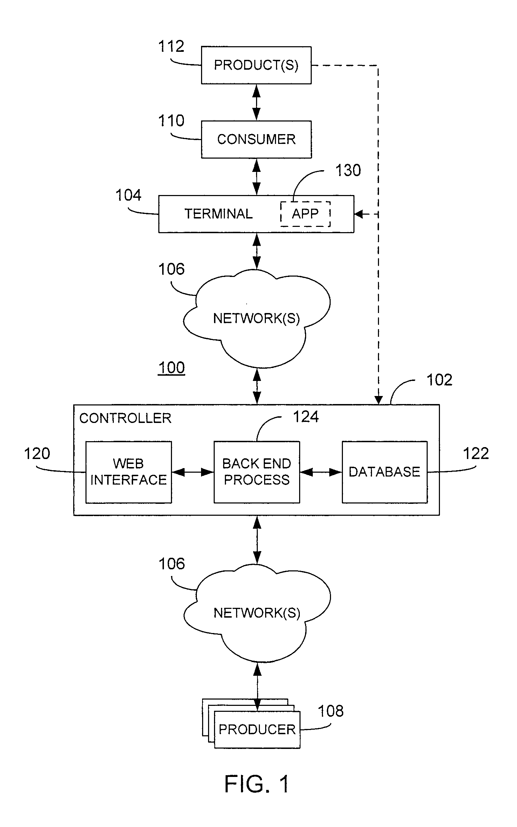

Referring now to FIG. 1, a system 100 in accordance with the instant disclosure is shown. Specifically, the system 100 comprises a controller 102 in communication with a plurality of terminals 104 (only one shown for ease of illustration) via one or more intervening networks 106. As described in greater detail below, the controller 102 may comprise one or more server computers, database servers or other types of computing devices as known in the art, particularly in connection with, for example, the implementation of websites and/or enterprise software. Similarly, the terminal(s) 104 may comprise processing devices deployed for the use of individual consumers or small groups of individual consumers, such as home-use desktop computers, laptop computers or the like. Alternatively, the terminal(s) 104 may comprise mobile computing devices such as handheld computers, mobile telephones and the like. The network(s) 106 may comprise a public network (e.g., the Internet, World Wide Web, etc.) or private network (e.g., local area network (LAN), etc.) or combinations thereof (e.g., a virtual private network, LAN connected to the Internet, etc.). Furthermore, the network 106 need not be a wired network only, and may comprise wireless network elements as known in the art. As described in further detail below, the controller 102 mediates communications between producers 108 and consumers 110 (again, only one shown for ease of illustration) via terminals 104 associated with the consumers 110.

Although the producers 108 are shown as interacting directly with the controller 102, it will be appreciated that producers will likewise communicate with the controller 102 via one or more computing devices akin to the terminals 104. As further shown in FIG. 1, the producers 108 (via the noted computing devices) may communicate with the controller via the network 106 or via other communication channels (not shown). The nature of the specific type of computing device used by a given producer to communicate with the controller 102 may vary according to the nature of the producer; large corporations or the like may employ highly autonomous server computers for this purpose, whereas small businesses or even individual proprietorships may rely on computing devices essentially identical to the terminals 104 (e.g., desktop or laptop computers). Regardless of their form, the terminals 104 or other computing devices used to communicate with the controller may employ well-known communication protocols (e.g., the Internet Protocol Suite or TCP/IP supporting HTTP) for this purpose.

As noted above, each consumer 110 may be an individual person or relatively small group of persons (e.g., a family) that may desire to communicate with a plurality of producers. Additionally, one or more products 112 possessed by a consumer may participate in the system 100, as described in further detail below, via the consumer 110 and terminal 104 or, as illustrated by the dotted lines, via the terminal 104 or even directly with the controller 102 (possibly, though not shown, via the network(s) 106). In an embodiment, products 112 may comprise any of a variety of devices (whether electrical, mechanical or electro-mechanical in nature, for example) typically possessed by a consumer. Additionally, such products may be available to consumers via traditional purchase channels, such a retailers or manufacturers. Still other channels may be employed whereby a consumer comes into possession of a product, such as consumer-to-consumer channels including on-line auctions, want ads, personal contacts, etc. Regardless of how consumers come into possession of products, examples of such products include, but are not limited to, televisions, audio systems, computing devices such as laptops, home computers or other personal electronics, mobile communication devices, cameras or camcorders, large and small household appliances (such as food processors or washing machines, respectively), etc.

Information about products possessed by individual consumers would be valuable both to producers for the insight that it can provide into individual consumers, and consumers to the extent that they may be able to receive information about their specific products (or other, similar products) that they might not receive or that is specifically tailored to their apparent needs. In an embodiment, the particular products 112 represented in the system 100 are characterizable as being within one or more field of products relevant to at least some of the plurality of producers 108. That is, each producer 108 may have a particular interest in a certain category (or field) of products. For example, a consumer electronics retailer may be interested in products falling within a relatively broad swath of consumer electronics categories, such as televisions, stereos, home computers, mobile phones, digital cameras, camcorders, etc. On the other hand, a manufacturer of large household appliance, or a repair service for such household appliances, may be interested only in such products. Those having ordinary skill in the art will appreciate that a variety of other categories or fields may be used in this manner.

In the illustrated embodiment, the controller 102 may comprise a web interface 120, a database 122 and, a back end process 124 as shown in FIG. 1. As known in the art, the web interface 120, database 122 and back end process 124 may be implemented by one or more server computers implementing appropriate software programs known to those of skill in the art. The web interface 120 operates to provide a graphical user interface that may be displayed on a terminal 104 and to manage the transfer of data received via and sent to the graphical user interface on the terminal 104. For example, the graphical user interface may be employed by the user to enter data about one more products possessed by the consumer and provide it to the controller 102, and to present communications from producers (via the controller 102) to the consumer, as described in further detail below. Techniques for implementing such graphical user interfaces, for example using a client-server model, are well known to those of skill in the art. In an alternative embodiment, a terminal 104 may include an application 130 (sometime referred to as an "app") comprising software that is downloaded to and executed by the terminal to provide the graphical user interface and to manage communications with the controller 102. In this embodiment, the application 130 may be downloaded to the terminal 104 from the controller 102 or from some other source such as an application distribution platform, e.g., the so-called "App Store" provided by Apple Inc.

The database 122 stores all data relevant to communications between the producers 108 and consumers 110 and vice versa. In an embodiment, the database 122 may comprise a database management system (DBMS) operating on one or more suitable database server computers, as known in the art. For example, the database 122 may store all of the products history data provided by a plurality of consumers, information associating respective products history data with individual consumers as well as aggregated products history data. Furthermore, the database 122 may store desired product data, as described below, in a manner similar to that for the products history data, i.e., associated with individual consumers and in aggregated form. Further still, communications received from producers 108 directed to various ones of the consumers 110 may also be stored in the database 122.

Finally, the back end process 124 is operatively coupled to both the web interface 120 and the database 122 in the illustrated embodiment. The back end process 124, which may be implemented by a suitably programmed computing device such as a server computer, directs operations of the controller 102, as described below in further detail. For example, the back end process 124 manages the receipt (from, for example consumers 110 via terminals 104 or from products 112) of products history data and the distribution thereof (such as in aggregated or otherwise anonymized form) to producers. Similarly, the back end process 124 manages communications received from producers 108 (in response to products history data or other data provided to the producers 108 by the controller 102) and directed to various ones of the consumers 110.

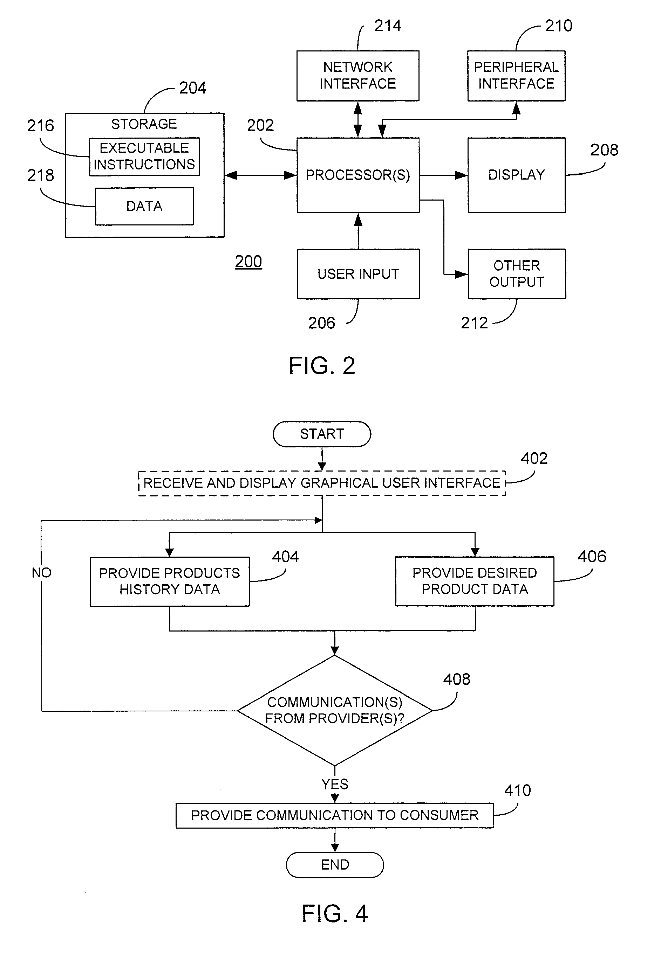

Referring now to FIG. 2, a representative processing device 200 that may be used to implement the teachings of the instant disclosure is illustrated. The device 200 may be used to implement, for example, the various processing or computing devices noted concerning the controller 102 and terminals 104, or the un-illustrated computing devices employed by the producers 108. Regardless, the device 200 comprises a processor 202 coupled to a storage component 204. The storage component 204, in turn, comprises stored executable instructions 216 and data 218. In an embodiment, the processor 202 may comprise one or more of a microprocessor, microcontroller, digital signal processor, co-processor or the like or combinations thereof capable of executing the stored instructions 216 and operating upon the stored data 218. Likewise, the storage component 204 may comprise one or more devices such as volatile or nonvolatile memory including but not limited to random access memory (RAM) or read only memory (ROM). Further still, the storage component 204 may be embodied in a variety of forms, such as a hard drive, optical disc drive, floppy disc drive, etc. Processor and storage arrangements of the types illustrated in FIG. 2 are well known to those having ordinary skill in the art. In one embodiment, the processing techniques described herein are implemented as a combination of executable instructions and data within the storage component 204.

As shown, the device 200 may comprise one or more user input devices 206, a display 208, a peripheral interface 210, other output devices 212 and a network interface 214 in communication with the processor 202. The user input device 206 may comprise any mechanism for providing user input (such as, for example, inputs specifying products history data, etc.) to the processor 202. For example, the user input device 206 may comprise a keyboard, a mouse, a touch screen, microphone and suitable voice recognition application or any other means whereby a user of the device 200 may provide input data to the processor 202. The display 208, may comprise any conventional display mechanism such as a cathode ray tube (CRT), flat panel display, or any other display mechanism known to those having ordinary skill in the art. The peripheral interface 210 may include the hardware, firmware and/or software necessary for communication with various peripheral devices, such as media drives (e.g., magnetic disk or optical disk drives), other processing devices or any other input source used in connection with the instant techniques. Likewise, the other output device(s) 212 may optionally comprise similar media drive mechanisms, other processing devices or other output destinations capable of providing information to a user of the device 200, such as speakers, LEDs, tactile outputs, etc. Finally, the network interface 214 may comprise hardware, firmware and/or software that allows the processor 202 to communicate with other devices via wired or wireless networks, whether local or wide area, private or public, as known in the art. For example, such networks may include the World Wide Web or Internet, or private enterprise networks, as known in the art.

While the device 200 has been described as one form for implementing the techniques described herein, those having ordinary skill in the art will appreciate that other, functionally equivalent techniques may be employed. For example, as known in the art, some or all of the functionality implemented via executable instructions may also be implemented using firmware and/or hardware devices such as application specific integrated circuits (ASICs), programmable logic arrays, state machines, etc. Furthermore, other implementations of the device 200 may include a greater or lesser number of components than those illustrated. Once again, those of ordinary skill in the art will appreciate the wide number of variations that may be used is this manner. Further still, although a single processing device 200 is illustrated in FIG. 2, it is understood that a combination of such processing devices may be configured to operate in conjunction (for example, using known networking techniques) to implement the teachings of the instant disclosure.

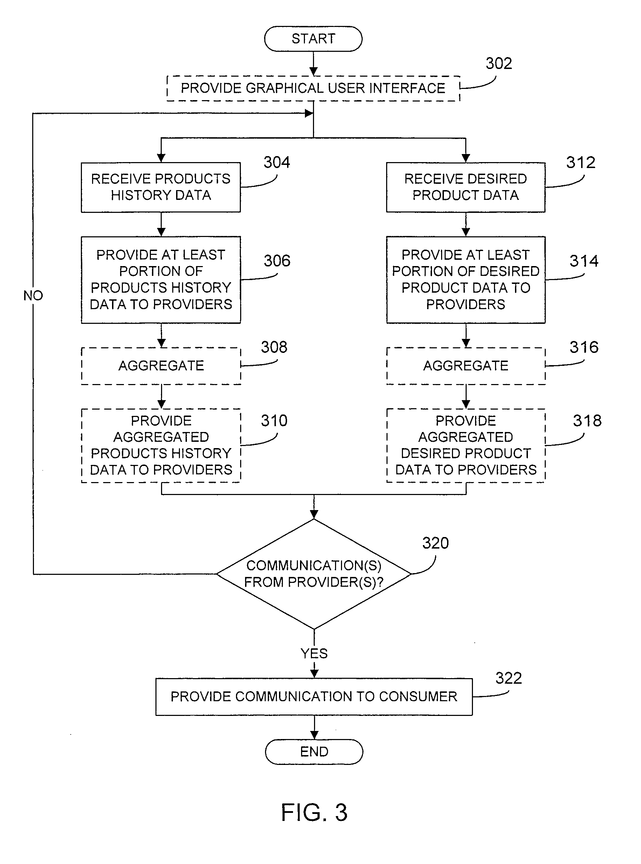

Referring now to FIG. 3, a flowchart illustrating processing performed by a controller in accordance with the instant teachings is shown. In an embodiment, the processing illustrated in FIG. 3 may be performed by the processing device 200 described above. Regardless, processing begins at block 302 where a graphical user interface may be optionally provided to a terminal associated with a given consumer. For example, the graphical user interfaces 500, 600 described in greater detail below, could be provided to the terminal. As noted above, in an alternative embodiment, the graphical user interface(s), rather than be provided by the controller, could be provided by an application running on the terminal without further intervention by the controller. As will be appreciated by those of skill in the art, a user interface other than a graphical user interface, such as a text based interface, could be equally employed. Regardless, processing continues alternatively at block 304 or 312.

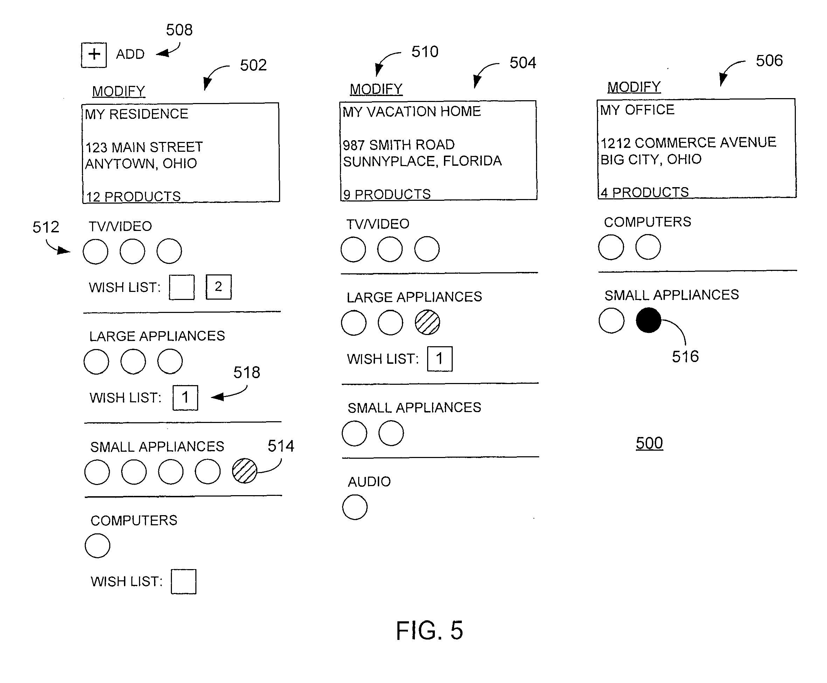

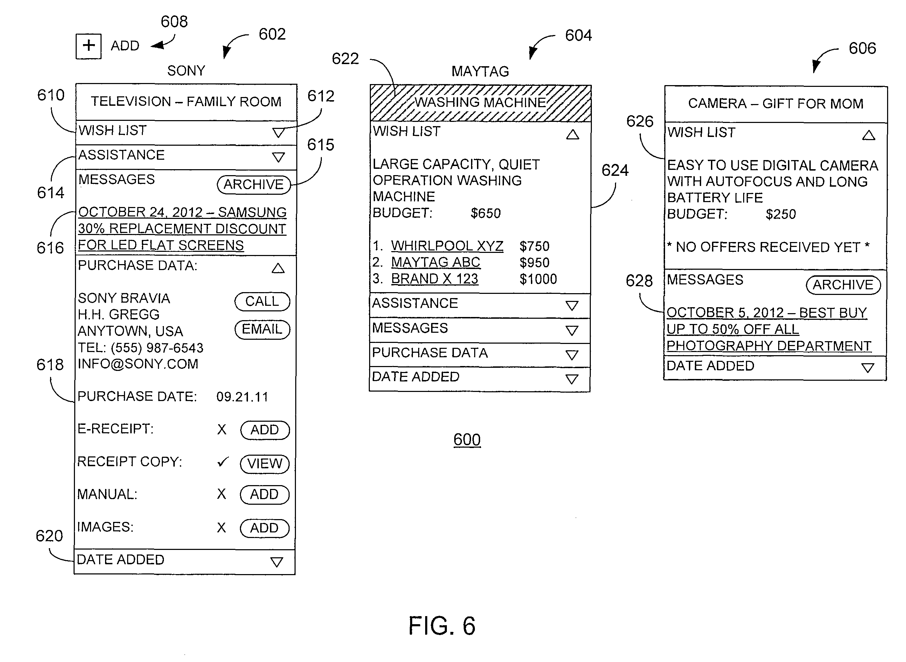

At block 304, the controller receive products history data from a consumer via, for example, a terminal as described above. When transmitted to the controller, the products history data may include an identification of the consumer (as obtained, for example, via a login procedure) and, optionally, the terminal (for example, using an Internet Protocol (IP) address of the terminal) such that the product history data may be associated with a specific consumer. In an embodiment, the products history data may comprise purchase information regarding a product possessed by a consumer. Purchase information may include, but is not limited to, make and/or model information of the product purchases, the date the product was purchased, where it was purchased, what entity it was purchased from, the purchase price, any warranty or guaranty information accompanying the purchase, any receipts associated with the purchase, any manuals or user guides associated with the purchase, etc. Additionally, when transmitted to the controller, the products history data may include information identifying a particular field or category of goods particularly applicable to a product and, consequently, the products history data associated therewith. For example, as described below with reference to FIGs. 5 and 6, a graphical user interface may be employed whereby the consumer can designate a particular field or category of goods applicable to a given product.

Alternatively, the products history data may also comprise status information for a given product. Such status information may include, but is not limited to, data describing the operational condition of the product, e.g., whether the product is operating normally, if normal maintenance is required or if there is an operational anomaly requiring attention. With regard to such status information, a variety of methods may be used to provide it to the controller. In one embodiment, such status information may be provided by a consumer to the controller (via a terminal). In another embodiment, the product may communicate directly with the terminal or be integral with the terminal. For example, the product could maintain a wired connection with the terminal (as in the case where the terminal comprises a home computer or the like) or a wireless connection with the terminal (as in the case where the terminal comprises a wireless, local area interface or the like). In this case, the application 130 may operate to mediate communications received from and directed to the terminal. In some instances, the terminal and product form a single device, as in the case where a component of a terminal (e.g., a video card or other co-processor of a computer) communicates its status via the terminal in which it resides. Further still, the product may communicate with the controller 102 directly, as in the case where the product includes, for example, a suitable network interface or other communication interface. In this instance, where a terminal is not directly involved in transmission of the status data, communication from the product to the controller may include an unique identifier of the specific product that is associated within the controller with a particular consumer in order to ensure association of the product's status data with that consumer. Alternatively, the status information provided in this manner may include an identification of the consumer that has been previously provided to the product.

Referring once again to FIG. 3, processing continues at step 306 where the controller provides at least a portion of the products history data for a given consumer to a plurality of producers. In an embodiment, all data provided to producers is anonymized in some form, although it is understood that identifiers of individual consumers or products history data could be provided to producers. Thus, the portion of the products history data may include any subset of the products history data but, instead of any data identifying the consumer, a generic identifier (such as a non-identifying alphanumeric string) may be provided to the producers. Within the controller, the actual identity of a consumer may be mapped to or otherwise associated with the generic identifier used for that consumer. Thus, should a given producer desire to respond to the portion of the products history data thus provided, they can do so using the previously received generic identifier such that the controller can determine from the generic identifier which consumer is the intended recipient of the response. Likewise, similarly generic identifiers could be mapped by the controller to specific portions of products history data provided to producers. Thus, in this embodiment, responses from producers may include the generic identifier for the specific portion of the product history data to which they are responding, thereby ensuring that the controller can present the response in a fashion that properly aligns the response to the relevant portion of the products history data. For example, in an embodiment, producers may provide queries to the controller, e.g., "What percentage of washing machines in France are older than 8 years?" In response, the controller may determine what products history data in its database satisfy the query, which query is assigned an identifier. In response, the controller can provide the desired information (e.g., "12% of the washing machines in France are older than 8 years.") along with the assigned identifier. Should the producer decide to respond to this query with a particular response such as, for example, a discount on a new washing machine, the response provided by the producer to the controller would include the identifier such that the controller could determine the query used to initiate the communication from the producer and, by re-running the query, determine which specific consumers should receive the communication. In this manner, the producer is able to communicate with a specific audience of consumers without actually knowing their specific identities.

In order to provide products history data to the producers, any of a number of well known techniques may be employed. For example, in one embodiment, producers may be provided the opportunity (via, for example, a suitable graphical user interface) to indicate a preference as to what particular fields or category of products (or even specific products as indicated by make and model) they would like to obtain product history data. Thus, following up on the previously provided example, the consumer electronics retailer may indicate a preference to receive products history data for a wide array of fields or categories, whereas a manufacturer may indicate a preference to receive products history data for only a relatively small number of fields or categories particularly applicable to the products it manufactures. Regardless of how individual producers indicate what particular fields or categories of products they are interested in, the data may be provided in various ways. For example, using a so-called push model, as new products history data pertaining to a given field or category is obtained, it (or some subset thereof) is automatically provided by the controller to any producers that desire to receive products history data within that field or category. Alternatively, a so-called pull model may be employed whereby a given producer may send a request for any new products history data, for example, any products history data received within a given prior period or since the producer's last request. In this case, the producer's request may include an indication of one or more specific fields or categories for which it would like to receive products history data.

Optionally, as shown by the dotted lines at blocks 308 and 310, the controller may aggregate a given consumer's products history data with the products history data for a plurality of other consumers (block 308) and subsequently provide the resulting aggregated products history data to the producers (block 310). Once again, producers may manifest their desire to obtain aggregated products history data using the techniques described above.

In this embodiment, the aggregated products history data may comprise statistical or otherwise representative information based on the collective products history data being aggregated. As known in the art, aggregated data can be determined according to any of a number of characteristics of the underlying data, e.g., according to characteristics of consumers and/or the underlying products. For example, such aggregate information may include what percentage of consumers participating in the system 100 possess a certain type of television. Alternatively, where demographic information about individual consumers is provided to the controller, such aggregate information may comprise what percentage of consumers within a certain age range or residing within a certain region own a specific product. Further still, the aggregated information may concern the frequency of anomalous status data for a given product or group of products, as determined by makes and models. Once again, those of skill in the art will appreciate that any of a large number of aggregations as described herein could be provided in accordance with the teachings of the instant disclosure. Additionally, techniques to provide the aggregated data, typically implemented by computerized applications for performing statistical and/or data mining analysis, are well known to those having skill in the art. As noted previously, in an embodiment, the aggregated products history data may be provided in an anonymized format such that the contribution of any individual consumer may not be readily determined, as known in the art. However, in order to properly route any subsequently received communications from producers that are based on the aggregated data, the aggregated data could include an identifier that is mapped within the controller to specific consumers having products history data that contributed to aggregated data.

In parallel with the processing illustrated by block 304-310, processing performed by the controller may also proceed along the path defined by blocks 312-318, which concern the handling of desired product data. Desired product data comprises data describing certain products (or services relevant to products) that a consumer would like to obtain. As described in greater detail below, such desired product data may constitute descriptions of varying specificity. Thus, at block 312, the controller receives desired product data from a consumer via a terminal. The desired product data may be associated with the consumer using the same techniques described above for associating products history data with the consumer. Likewise, the desired product data may also be associated with one or more fields or categories of products (or services) using the above-described techniques. Thereafter, at block 314, at least a portion of the desired product data may be sent to the various producers. Once again, using the techniques described above, the producers may designate what fields or categories of products for which they would like to receive desired product data. Additionally, using essentially the same techniques described above relative to blocks 308 and 310, aggregated desired product data may be generated and provided to one or more producers at blocks 316 and 318, respectively. Once again, in the case of aggregated or otherwise anonymized desired product data, generic identifiers may be employed to ensure that responses are properly associated with the desired product data that initiated such responses.

Regardless whether products history data is provided to the producers as per blocks 304-310 or whether desired product data is provided to the producers as per blocks 312-318, processing continues at block 320 where it is determined whether any communications have been received from the producers, particularly in response to either the products history data or the desired product data. If no such communication is received, processing continues at blocks 304 and/or 312 as described above. If, however, such a communication is received by the controller, processing continues at block 322 where the communication is provided by the controller to the consumer via the corresponding terminal. As noted previously, any communication received from a producer should include the identifier used to identify the consumer or consumers via the mapping stored in the controller such that the communication can be routed by the controller to the appropriate consumer or consumers via their corresponding terminals.

Turning now to FIG. 4, a flowchart illustrating processing by a terminal in accordance with the instant disclosure is shown. In an embodiment, the processing illustrated in FIG. 4 may be performed by the processing device 200 described above. Regardless, processing begins at block 402 where a graphical user interface may be optionally received by the terminal from the controller. Once again, in an alternative embodiment, the graphical user interface(s), rather than be provided by the controller, could be provided by an application running on the terminal without further intervention by the controller, and a user interface other than a graphical user interface, such as a text based interface, could be equally employed.

FIGs. 5 and 6 illustrate examples of graphical user interface 500, 600 that may be used in various embodiments of the instant disclosure. For example, the graphical user interface 500 illustrated in FIG. 5 comprises a variety of location indicators 502-506 summarizing the products associated with a consumer at various locations relevant to that consumer. In the illustrated example, the locations indicators correspond to a given consumer's residence 502, his/her vacation home 504 and office 506. New location indicators may be added as desired through selection of an "add" control 508, whereby the consumer is prompted to enter identifying information of the new location as well as products possessed by the consumer and relevant to the new location. As shown, each location indicator 502-506 may include data indicating the specific address of the location as well as the number of products tracked by the system for that location. Should the consumer desired to add or remove products associated with a location, or even remove an entire location, each location indicator also includes a modification control 510 whereby the consumer can be prompted for any desired edits.

Underneath each location indication 502-506, a summary 512 of the products associated with that location may be provided. As shown, each summary may include one or more product fields or categories (e.g., "TV/Video", "Large Appliances", "Small Appliances", "Computers", etc.), with each field or category including one or more icons representing a product within that field or category for that location. For example, under the "My Residence" location indicator 502, the "TV/Video" category shows three circles representing three different products falling within this category. Likewise, the "Large Appliances" category, the "Small Appliances" category and the "Computers" category illustrates three products, five products and one product, respectively, within each category. Additionally, a feature of the illustrated icons may be used to indicate status of the product to which it corresponds. For example, as illustrated in FIG. 5, a circle icon shown with no pattern or color indicates that the corresponding product is operating normally (as indicated by any status data provided to the system). Conversely, a circle icon with cross-hatching 514 indicates that the corresponding product is operating normally but requires routine or scheduled maintenance in the near future. Further still, a black circle icon 516 indicates that the corresponding product is experiencing anomalous operation and requires immediate maintenance or repair. Those having skill in the art will appreciate that other icon shapes and features of such shapes could be used for these purposes. For example, rather than a generic icon such as a circle or other shape, an icon comprising text and/or graphics indicative of a particular brand of a product could be used for this purpose. Additionally, it will be noted that each icon as illustrated in FIG. 5 only generically identifies each underlying product, i.e., without any identifying data of the underlying product. In an embodiment, selection of a given icon (.e.g., by "hovering" a cursor over a given icon, or by single-clicking an icon) may cause information regarding the underlying product to be displayed, for example, through the use of a "pop up" window or the like.

As further shown, a wish list indicator 518 may be associated with any of the categories shown beneath a given location indicator. Where present, each wish list indicator 518 illustrates that desired product data, as described above, has been provided by the consumer for that particular product category and at that particular location. For example, as shown in FIG. 5, the wish list indicator 518 may comprise one or more square icons, each representing separately provided desired product data concerning products within that category. As further shown, numbers within each square icon may be used to indicate a number of communications from producers that have been received in response to the desired product data; where no number is shown within a square icon, no response have yet been received. In this manner, the graphical user interface of FIG. 5 provides a succinct, at-a-glance summary of the various products being tracked by the system for a given consumer.

In an embodiment, the location indications 502-506 may be selectable such that selection of any one of the indicators will cause the graphical user interface to display a more detailed illustration of the data corresponding to the selected location. An example of such a graphical user interface 600 is further illustrated in FIG. 6. For example, the interface 600 may be generated in response to a user (i.e., the consumer) selecting the "My Residence" location indicator 502. As shown, the interface 600 comprises product summaries 602-606, with an additional add control 608 provided such that a user can add additional products for this location. Although not shown, the provision of information regarding new products added through selection of the add control 608 may include a designation of a particular field or category for a product, such as those described above with reference to FIG. 5 and its accompanying description. As shown, each summary 602-606 may comprise a short, user-editable description of the underlying product, .e.g., "Sony", "Television - Family Room", "Maytag" and "Washing Machine." Although not shown, modification controls may be provided whereby the user can edit the short descriptions or any of the other data shown within the summaries 602-606.

Further still, when entering data concerning a newly added product (once again, via selection of the add control 608), a setup panel or similar user interface can be provided in connection with products that are capable of reporting their own status, as noted above. In this case, the interface provided may include a field for entering data that identifies the product (e.g., a serial number and/or IP address) to the controller. Additionally, fields may be provided as necessary to establish any communication paths such that the product can communicate its status as needed.

Additionally, in an embodiment, each summary 602-606 may include specific information fields. For example, each product may have a wish list field 610, an assistance field 614, a general messages field 616, a purchase data field 618 and a date added field 620 associated therewith. In turn, each of the fields 610-620 may comprise a hide/unhide control 612 to determine whether the information within that field will be displayed. Furthermore, each field may have one or more control buttons 615 that permit editing of the content displayed within each field or operations to be performed in accordance with the content displayed within each field, as described below.

As shown within the first product summary 602, the messages field 616 may be used to display communications concerning this particular product received from one or more producers. As used herein, such communications may comprise promotional offers, incentives, coupons, service offers, etc.-virtually any kind of information that a producer may like to provide to a consumer. As shown, each communication could be made selectable in the form of a hyperlink that permits the user to select the communication and be provided with additional or more detailed information concerning the communication. In the illustrated example, an "Archive" control is provided that, upon selection by the user, will cause the associated message to be archived (i.e., preserved but removed from the display 600). Other similar controls for use in manipulating such messages will be apparent to those of skill in the art.

As further shown within the first product summary 602, the purchase data field 618 sets forth the products history data taking the form of purchase history data. For example, as shown, information listing the make and model of the product, as well as where the product was purchased and contact information for the seller, may be provided. In this example, "Call" and "Email" controls are provided that would cause the terminal on which the display 600 is presented to instantiate appropriate telephone or email applications whereby the user can contact the seller using the illustrated contact information. As further show, the purchase history data may include various entries memorializing the purchase, such as the purchase date, entries for any electronic receipt or a copy of a paper receipt received during the purchase and entries for any manuals or images corresponding to the product when purchased. As shown, each of these entries can be provided with an indicator whether data for the particular entry has been previously provided (as indicated by the check mark) or not (as indicated by the x-mark). Further still, each entry may comprises a separate control that allow the user to view previously provided data for a given entry, or to add data for an entry for which no previously data currently exists.

Examples of wish list fields 624, 626 are shown in association with the second and third product summaries 604, 606, respectively. As shown, each wish list entry comprise desired product data. In the illustrated examples, the desired product data may comprise a textual description of the desired product (e.g., "Large capacity, quiet operation washing machine" or "Easy to use digital camera with autofocus and long battery life") as well as a designated budget for the desired product. Akin to the messages field 616 described above, communications from producers made in response to desired product data may be displayed with the wish list field 624. In this case, each response is illustrated as a hyperlinked indication of each producer's specific product that is the subject of the communication, as well as an indication of the price being offered by that producer. Conversely, if no offers have yet been received in response to the desired product data, a corresponding indication (e.g., "No offers received yet") may be provided in the wish list field 626. Note that messages not specifically tied to the desired products data may also be displayed in the messages field 628 for a given product summary 606.

Although a specific example is not illustrated in FIG. 6, the assistance field 614 may comprise information related to assistance that has been requested in connection with a given product. For example, as shown in FIG. 6, the second product summary 604 may include a visual indication 622 in the form of cross-hatched background indicating that the product (in this case, the "Washing Machine") requires routine or scheduled maintenance. In this case, the assistance field may include information concerning when the warranty on the product will expire as well as controls that may be selected to issue a request (possibly in the form of either products history data or desired product data, as described above) for the necessary service. In the event that such service had been previously requested, the assistance field may include a status indication detailing the current status of the service being provided as well as contact information for the service provider. Further still, the assistance field may include a history of services performed for this product, such as the number of times such service has been performed, when it was previously performed, by whom, etc. Likewise, although no specific example is illustrated in FIG. 6, the data added field 620 may comprise an indication when particular product summary was added and/or last updated.

Referring once again to FIG. 4, processing may continue at either block 404 and/or block 406. At block 403, the terminal provides products history data (received, for example, via the graphical user interface 600 described above) to the controller. Additionally, the terminal can also provide desired product data to the controller at block 406. Regardless, processing continues at block 408 where it is determined whether one or more communications, in response to the products history data and/or the desired product data previously provided, are received from the controller. If not, processing continues at blocks 404 and/or 406. If one or more communications are received, processing continues at block 410 wherein the terminal (again, via the graphical user interface 600, for example) provides the communication to the consumer.

While particular preferred embodiments have been shown and described, those skilled in the art will appreciate that changes and modifications may be made without departing from the instant teachings. For example, the techniques described herein may be equally applied to services employed by consumers, as opposed to products alone. It is therefore contemplated that any and all modifications, variations or equivalents of the above-described teachings fall within the scope of the basic underlying principles disclosed above and claimed herein.

## Claims

1. A method for a plurality of producers to communicate with a consumer, the method comprising:
receiving, by a controller implemented by at least one processing device, products history data provided by the consumer, the products history data concerning at least one product possessed by the consumer and characterizable as being within at least one field of products relevant to at least some of the plurality of producers;
providing, by the controller, at least a portion of the products history data to the plurality of producers;
receiving, by the controller from at least one producer of the plurality of producers, a communication based on the portion of the products history data; and
providing, by the controller, the communication to the consumer.

2. The method of claim 1, further comprising:
providing, by the controller, a graphical user interface that permits the consumer to provide the products history data to the controller; and/or
wherein the products history data comprises purchase information concerning the at least one product; and/or
wherein the products history data comprises status information concerning the at least one product.

3. The method of any one of claim 1 to 2, further comprising:
receiving, by the controller, desired product data from the consumer, the desired product data describing products the consumer would like to obtain;
providing, by the controller, at least a portion of the desired product data to the plurality of producers;
receiving, by the controller from any one of the plurality of producers, another communication based on the portion of the desired product data; and
providing, by the controller, the other communication to the consumer.

4. The method of any one of claims 1 to 3, further comprising:
aggregating, by the controller, products history data for a plurality of consumers to provide aggregated products history data; and
providing, by the controller, the aggregated products history data to the plurality of producers.

5. An apparatus for facilitating communications between a plurality of producers and a consumer, the apparatus comprising:
a processing device;
a storage device, operatively connected to the processing device, having stored thereon instructions that, when executed by the processing device, cause the processing device to:
receive products history data provided by the consumer, the products history data concerning at least one product possessed by the consumer and characterizable as being within at least one field of products relevant to at least some of the plurality of producers;
provide at least a portion of the products history data to the plurality of producers; and
receive, from at least one producer of the plurality of producers, a communication based on the portion of the products history data; and
provide the communication to the consumer.

6. The apparatus of claim 5, the storage device further comprising instructions that, when executed by the processing device, cause the processing device to:
provide a graphical user interface that permits the consumer to provide the products history data to the controller; and/or
wherein the products history data comprises at least one of purchase information and status information concerning the at least one product.

7. The apparatus of any one of claims 5 to 6, the storage device further comprising instructions that, when executed by the processing device, cause the processing device to:
receive desired product data from the consumer, the desired product data describing products the consumer would like to obtain;
provide, at least a portion of the desired product data to the plurality of producers;
receive, from any one of the plurality of producers, another communication based on the portion of the desired product data; and
provide the other communication to the consumer.

8. The apparatus of any one of claims 5 to 7, the storage device further comprising instructions that, when executed by the processing device, cause the processing device to:
aggregate products history data for a plurality of consumers to provide aggregated products history data; and
provide the aggregated products history data to the plurality of producers.

9. A method for a plurality of producers to communicate with a consumer via a terminal implemented by at least one processing device and comprising a user interface, the method comprising:
providing, to a controller via the terminal, products history data concerning at least one product possessed by the consumer and characterizable as being within at least one field of products relevant to at least some of the plurality of producers;
receiving, by the terminal from the controller, a communication from at least one producer of the plurality of producers and based on at least a portion of the plurality of products history data; and
providing, by the terminal via the user interface, the communication to the consumer,
wherein the controller provides the portion of the products history data to the plurality of producers and receives the communication from the at least one producer.

10. The method of claim 9, further comprising:
receiving, by the terminal from the controller, graphical user interface data;
displaying, by the terminal on the user interface, a graphical user interface based on the graphical user interface data; and
receiving, by the terminal via the graphical user interface, the products history data;
and/or
wherein the products history data comprises purchase information concerning the at least one product; and/or
wherein the products history data comprises status information concerning the at least one product.

11. The method of any one of claims 9 to 10, further comprising:
providing, by the terminal to the controller, desired product data describing products the consumer would like to obtain;
receiving, by the terminal from the controller, another communication from any one of the plurality of producers and based on at least a portion of the desired product data; and
providing, by the terminal via the user interface, the other communication to the consumer,
wherein the controller provides the portion of the desired product data to the plurality of producers and receives the other communication from the one of the plurality of producers.

12. An apparatus for facilitating communications between a plurality of producers and a consumer, the apparatus comprising:
a processing device;
a user interface operatively connected to the processing device;
a storage device, operatively connected to the processing device, having stored thereon instructions that, when executed by the processing device, cause the processing device to:
provide, to a controller, products history data concerning at least one product possessed by the consumer and characterizable as being within at least one field of products relevant to at least some of the plurality of producers;
receive, from the controller, a communication from at least one producer of the plurality of producers and based on at least a portion of the plurality of products history data; and
provide, via the user interface, the communication to the consumer,
wherein the controller provides the portion of the products history data to the plurality of producers and receives the communication from the at least one producer.

13. The apparatus of claim 12, the storage device further comprising instructions that, when executed by the processing device, cause the processing device to:
receive, from the controller, graphical user interface data;
display, on the user interface, a graphical user interface based on the graphical user interface data; and
receive, via the graphical user interface, the products history data; and/or
wherein the products history data comprises at least one of purchase information and status information concerning the at least one product.

14. The apparatus of any one of claims 12 to 13, the storage device further comprising instructions that, when executed by the processing device, cause the processing device to:
provide, to the controller, desired product data describing products the consumer would like to obtain;
receive, from the controller, another communication from any one of the plurality of producers and based on at least a portion of the desired product data; and
provide, via the user interface, the other communication to the consumer,
wherein the controller provides the portion of the desired product data to the plurality of producers and receives the other communication from the one of the plurality of producers.

15. A system or facilitating communications between a plurality of producers and a consumer, the system comprising:
a plurality of terminals operative to receive, from the consumer, products history data provided concerning at least one product possessed by the consumer and characterizable as being within at least one field of products relevant to at least some of the plurality of producers; and
a controller, operatively coupled to the plurality of terminals, operative to receive the products history data, provide at least a portion of the products history data to the plurality of producers, receive, from at least one producer of the plurality of producers, a communication based on the portion of the products history data and provide the communication to the terminal,
wherein the terminal is further operative to provide the communication to the user.
